# EUROPEAN PATENT APPLICATION

(11) **EP 1 309 150 A2**
(43) Date of publication of application: **07.05.2003**
(21) Application number: 02024429.9
(22) Date of filing: 29.10.2002
(51) Int. Cl.: H04L 29/06

(54) **Metadata receiving apparatus and method**

(30) Priority: 31.10.2001 JP 2001334129; 18.12.2001 JP 2001384144
(71) Applicant: VICTOR COMPANY OF JAPAN, LIMITED, Yokohama-Shi Kanagawa-Ken 221 (JP)
(72) Inventor: Azami, Tomohiro, Yokosuka-shi, kanagawa-ken (JP)
(74) Representative: HOFFMANN - EITLE

(57) **Abstract**

Each metadata stream information unit that is received includes at least one of information on the data amount of a metadata stream corresponding thereto and information on the description contents of the corresponding metadata stream. Based on at least one of the information on the data amount and the information on the description contents that are included in received metadata stream information (B1), predetermined metadata streams are selected (B2) from the received metadata streams and the selected metadata streams are merged (B3) and output (F).

## Description

### BACKGROUND OF THE INVENTION

### 1. Field of the Invention

The present invention relates to a metadata receiving apparatus, a receiving method, a receiving program, a recording medium recording therein the metadata receiving program, a metadata sending apparatus, and a transmitting method, wherein the metadata describes the substance of contents such as image data and sound data.

An object of the present invention is to provide a metadata receiving apparatus and a receiving method that enable a receiving end to receive metadata efficiently and a metadata receiving apparatus and a receiving method that enable a sending end to transmit metadata efficiently.

Another object of the present invention is to provide a metadata receiving program that enables a receiving end to receive metadata efficiently, a metadata receiving program that enables metadata to be transmitted efficiently, and a computer-readable recording medium recording therein the metadata receiving program.

A still another object of the present invention is to provide a metadata sending apparatus that enables a receiving end to receive metadata efficiently and a metadata sending apparatus and a transmitting method that enable metadata to be transmitted efficiently.

### 2. Description of the Related Art

Recently, metadata describing the substance of the contents has been added to contents to increase efficiency in contents management and search. Some standards for metadata have also been established. For example, in digital broadcasting, program guide information called Electronic Program Guide (EPG) is distributed. Also, MPEG-7 standardization work is being done to establish an international standard for describing the contents of AV contents.

A technology for transmitting metadata is disclosed, for example, in Japanese Patent Laid-Open Publication No. 2000-4272 "Data distribution method, sending apparatus, receiving apparatus, and data distribution system using the data distribution method, and data structure used in the data distribution system". The technology disclosed in this publication provides a data distribution method in which an information provider sends metadata over an information transmission medium and an information receiving end obtains contents data corresponding to the metadata based on the received metadata. This data distribution method allows the information receiving end to selectively receive contents data based on the metadata, thus increasing the transmission efficiency and filtering efficiency of data distribution.

When transmitting metadata corresponding to contents, a conventional metadata transmission method converts the metadata to a format suitable for transmission but transmits all metadata corresponding to the contents. Therefore, even when the transmitted metadata includes metadata unnecessary for the receiving end, the receiving end cannot selectively receive necessary data only and this makes it difficult to increase metadata receiving processing efficiency. In particular, when the amount of metadata is large, it gets more difficult to increase receiving efficiency. Transmitting unnecessary metadata to the receiving end also presents a transmission efficiency problem.

### SUMMARY OF THE INVENTION

It is an object of the present invention to provide a metadata receiving apparatus and a metadata receiving method that allow a receiving end to selectively receive necessary data from transmitted metadata and to provide a metadata receiving apparatus and a metadata receiving method that allow a sending end to transmit metadata efficiently.

It is another object of the present invention to provide a metadata receiving program and a computer-readable recording medium recording therein the metadata receiving program that allow a receiving end to selectively receive necessary data from metadata and to provide a metadata receiving program and a computer-readable recording medium recording therein the metadata receiving program that allow metadata to be transmitted efficiently.

It is still another object of the present invention to provide a metadata sending apparatus and a metadata transmitting method that allow a receiving end to selectively receive necessary data from metadata and to provide a metadata sending apparatus and a metadata transmitting method that allow metadata to be transmitted efficiently.

To achieve the above objects, there is provided a metadata receiving apparatus receiving metadata streams that describe the substance of contents and metadata stream information that is information on the metadata streams, the metadata stream information including at least one of information on a data amount of a metadata stream corresponding thereto and information on description contents of the corresponding metadata stream, the metadata receiving apparatus comprising: receiving means for separating received data into the metadata streams and the metadata stream information for output; metadata stream information interpreting means for checking a requirement of each of the metadata streams corresponding to the received metadata stream information based on at least one of the information on the data amount and the information on the description contents, both information being included in the received metadata stream information; metadata stream selecting means for selecting only the metadata streams, which are judged as required by the metadata stream information interpreting means, from the metadata streams output by the receiving means and outputting the selected metadata streams; and metadata merging means for merging the metadata streams output by the metadata stream selecting means and outputting the merged metadata streams as metadata.

To achieve the above objects, there is provided a metadata receiving apparatus receiving packets assembled from metadata streams that describe the substance of contents and packets assembled from metadata stream information that is information on the metadata streams, wherein the metadata stream information includes at least one of information on a data amount of a metadata stream corresponding thereto and information on description contents of the corresponding metadata stream and wherein an identifier indicating that the metadata stream is included and an identifier identifying the metadata stream are added to each packet that includes the metadata stream and an identifier indicating that the metadata stream information is included is added to each packet that includes the metadata stream information, the metadata receiving apparatus comprising: receiving means comprising packet separating means for separating received packets into packets including the metadata stream information and packets including the metadata stream, for disassembling the packets including the metadata stream information and outputting the metadata stream information, and, based on requirement checking information, for disassembling packets including the metadata stream judged as required and outputting metadata streams judged as required; metadata stream information interpreting means for checking a requirement of the metadata stream corresponding to the received metadata stream information and outputting the requirement checking information to the receiving means, the requirement checking being based on at least one of the information on the data amount of the corresponding metadata stream and the information on the description contents of the corresponding metadata stream, both information being included in the metadata stream information output by the receiving means; and a metadata merging means for merging the metadata streams output by the receiving means and outputting metadata, wherein the packet separating means separates the received packets into the packets including the metadata stream information and the packets including the metadata streams based on the identifier indicating that the metadata stream information is included and the identifier indicating that the metadata stream is included, disassembles the packets including the metadata stream information and outputs the metadata stream information, selects the packets including the metadata stream, which is judged as required based on the requirement checking information, using the identifier identifying the metadata stream, and disassembles the selected packets and outputs the metadata streams.

To achieve the above objects, there is provided a metadata receiving apparatus requesting a sending end to send, and receiving from the sending end, a metadata stream that describes the substance of contents and metadata stream information that is information on the metadata stream, the metadata stream information including at least one of information on a data amount of a metadata stream corresponding thereto and information on description contents of the corresponding metadata stream, the receiving apparatus comprising: metadata stream information receiving means for requesting the sending end to send, and receiving from the sending end, the metadata stream information that is predetermined; checking means for checking a requirement of the metadata stream corresponding to the received predetermined metadata stream information based on at least one of the data amount of the received predetermined metadata stream information and the information on the description contents, both information being included in the received predetermined metadata stream information; metadata stream receiving means for requesting the sending end to send, and receiving from the sending end, the metadata stream judged as required by the checking means; and merging means for merging a plurality of received metadata streams if the plurality of metadata streams are received.

In a preferred embodiment of the present invention, the predetermined metadata stream information includes depended information that is information specifying other metadata streams to be associated with the metadata stream corresponding to the predetermined metadata stream information, wherein the checking means extracts the depended information from the received predetermined metadata stream information and outputs request information, which requests the sending end to send the metadata stream information on the other metadata streams specified by the depended information, to the metadata stream information receiving means, wherein, in response to the request information, the metadata stream information receiving means additionally requests the sending end to send, and receives from the sending end, the metadata stream information on the other metadata stream specified by the depended information, and wherein, based on the additionally received metadata stream information, the checking means additionally judges the other metadata streams, which are specified by the depended information, as required if the other metadata streams may be processed after reception.

To achieve the above objects, there is provided a metadata receiving method for receiving a plurality of metadata streams, which are generated by dividing metadata describing the substance of contents, and metadata stream information which is information on each of the metadata streams, the metadata stream information including at least one of information on a data amount of a metadata stream corresponding thereto and information on description contents of the corresponding metadata stream, the method comprising the steps of: selecting predetermined metadata streams from the received metadata streams based on at least one of the information on the data amount and the information on the description contents, both information being included in the received metadata stream information; and merging and outputting the selected metadata streams.

To achieve the above objects, there is provided a metadata receiving method for receiving a plurality of metadata streams describing the substance of contents and metadata stream information on each of the metadata streams, wherein each unit of the metadata stream information includes at least one of a data amount of a metadata stream corresponding thereto and information on description contents of the corresponding metadata stream, the metadata receiving method comprising the steps of: selecting predetermined metadata streams from the received metadata streams based on at least one of the information on the data amount and the information on the description contents, both information being included in the received metadata stream information; and merging and outputting the selected metadata streams.

In a preferred embodiment of the present invention, if depended information is included in the metadata stream information on the predetermined metadata stream selected from the received metadata streams, the depended information specifying other metadata streams to be associated with the predetermined metadata stream, the metadata receiving method further comprises the steps of: if there are metadata streams specified by the depended information but not included in the selected predetermined metadata streams, additionally selecting metadata streams, which may be processed after reception, from the metadata streams not included in the selected predetermined metadata streams; merging the additionally selected metadata streams with the already selected metadata streams; and outputting the merged metadata streams.

In a preferred embodiment of the present invention, each of the metadata streams and each unit of the metadata stream information that are received are assembled in packets, an identifier indicating that the metadata stream is included is added to a packet including the metadata stream and an identifier indicating that the metadata stream information is included is added to a packet including the metadata stream information, and the packets including the metadata stream information are received before the packets including the metadata stream information are received.

In a preferred embodiment of the present invention, each of the metadata streams and each unit of the metadata stream information that are received are assembled in packets, an identifier indicating that the metadata stream is included and an identifier identifying the metadata stream are added to a packet including the metadata stream and an identifier indicating that the metadata stream information is included is added to a packet including the metadata stream information, and the packets including the metadata stream information are received before the packets including the metadata stream information are received.

To achieve the above objects, there is provided a metadata receiving method for requesting a sending end to send, and receiving from the sending end, a metadata stream describing the substance of contents and metadata stream information that is information on the metadata stream, the metadata stream information including at least one of information on a data amount of the corresponding metadata stream and information on description contents of the corresponding metadata stream, the metadata receiving method comprising the steps of: requesting the sending end to send, and receiving from the sending end, the metadata stream that is predetermined; checking a requirement of the metadata stream corresponding to the received predetermined metadata stream information based on at least one of the information on the data amount and the information on the description contents, both information being included in the received predetermined metadata stream information; and requesting the sending end to send, and receiving from the sending end, the metadata stream judged as required.

In a preferred embodiment of the present invention, if depended information is included in the received predetermined metadata stream information, the depended information specifying other metadata streams to be associated with the metadata stream corresponding to the predetermined metadata stream information, the metadata receiving method further comprises the steps of: requesting the sending end to send, and receiving from the sending end, the metadata stream information on the other metadata streams specified by the depended information; and, based on the received metadata stream information, also judging metadata streams as required if the metadata streams included in the other metadata streams specified by the depended information may be processed after reception.

In a preferred embodiment of the present invention, the metadata stream information sent from the sending end is assembled in packets and the packets are disassembled to obtain the metadata stream information and the metadata stream sent from the sending end is assembled in packets and the packets are disassembled to obtain the metadata stream.

To achieve the above objects, there is provided a metadata receiving program causing a computer to function as receiving means for receiving a plurality of metadata streams describing the substance of contents and metadata stream information that is information on each of the metadata streams, the metadata stream information including at least one of information on a data amount of a metadata stream corresponding thereto and information on description contents of the corresponding metadata stream, the metadata receiving program causing the computer to execute: a receiving function separating received data into the metadata streams and the metadata stream information; a selecting function selecting predetermined metadata streams from the received metadata streams based on at least one of the information on the data amount and the information on the description contents, both information being included in the received metadata stream information; and a merging and outputting function merging the selected metadata streams and outputting the merged data, thus causing the computer to function as metadata receiving means.

In a preferred embodiment of the present invention, if depended information is included in the metadata stream information on the predetermined metadata stream selected from the received metadata streams, the depended information specifying other metadata streams to be associated with the predetermined metadata stream, the metadata receiving program further causes the computer to execute: if there are metadata streams specified by the depended information but not included in the selected predetermined metadata streams, an additional selection function additionally selecting metadata streams, which may be processed after reception, from the metadata streams not included in the selected predetermined metadata streams; and an additional merging and output function merging the additionally selected metadata streams with the already selected metadata streams and outputting the merged metadata streams.

To achieve the above objects, there is provided a metadata receiving program causing a computer to function as receiving means for requesting a sending end to send, and receiving from the sending end, a metadata stream describing the substance of contents and metadata stream information that is information on the metadata stream, the metadata stream information including at least one of information on a data amount of a metadata stream corresponding thereto and information on description contents of the corresponding metadata stream, the metadata receiving program causing the computer to execute: a metadata stream information receiving function requesting the sending end to send, and receiving from the sending end, the metadata stream that is predetermined; a checking function checking a requirement of the metadata stream corresponding to the received predetermined metadata stream information based on at least one of the information on the data amount and the information on the description contents, both information being included in the received predetermined metadata stream information; and a metadata stream receiving function requesting the sending end to send, and receiving from the sending end, the metadata stream judged as required, thus causing the computer to function as metadata receiving means.

In a preferred embodiment of the present invention, if depended information is included in the received predetermined metadata stream information, the depended information specifying other metadata streams to be associated with the metadata stream corresponding to the predetermined metadata stream information, the metadata receiving program further causes the computer to execute: the metadata stream information receiving function as a receiving function that requests the sending end to send, and additionally receives from the sending end, the metadata stream information on the other metadata streams specified by the depended information; and the checking function as a checking function that, based on the additionally received metadata stream information, also judges metadata streams as required if the metadata streams included in the other metadata streams specified by the depended information may be processed after reception.

To achieve the above objects, there is provided a computer-readable recording medium recording therein the metadata receiving program described above.

To achieve the above objects, there is provided a metadata sending apparatus comprising: first communication controlling means for assembling into packets a plurality of metadata streams describing the substance of contents and metadata stream information that is information on each of the metadata streams, the metadata stream information including at least one of information on a data amount of a metadata stream corresponding thereto and information on description contents of the corresponding metadata stream; second communication controlling means for assembling contents data, which is data of the contents, into packets; and sending means for multiplexing the metadata streams assembled in the packets, the metadata stream information assembled in packets, and the contents data assembled in packets for transmission to a transmission line.

To achieve the above objects, there is provided a metadata sending apparatus comprising: storing means for storing a plurality of metadata streams describing the substance of contents and metadata stream information that is information on each of the metadata streams, the metadata stream information including at least one of information on a data amount of a metadata stream corresponding thereto and information on description contents of the corresponding metadata stream; and sending means for sending the metadata stream information and the metadata streams read from the storing means, the metadata stream information preceding the metadata streams.

In a preferred embodiment of the present invention, at least one unit of the metadata stream information includes depended information specifying other metadata streams to be associated with the corresponding metadata stream.

To achieve the above objects, there is provided a metadata sending apparatus comprising: metadata stream sending controlling means for arranging into one stream, and assembling into packets, a plurality of metadata streams describing the substance of contents and for adding to each packet an identifier indicating that the metadata stream is included; metadata stream information sending controlling means for arranging into one stream, and assembling into packets, a plurality of metadata stream information units each of which is information on each metadata stream and for adding to each packet an identifier indicating that the metadata stream information is included, the metadata stream information including at least one of information on a data amount of a metadata stream corresponding thereto and information on description contents of the corresponding metadata stream; and sending means for sending the packets including the metadata stream information to a transmission line before sending the packets including the metadata streams.

To achieve the above objects, there is provided a metadata sending apparatus comprising: metadata stream sending controlling means for assembling into packets each of a plurality of metadata streams describing the substance of contents and for adding to each packet an identifier indicating that the metadata stream is included and an identifier indicating the metadata stream; metadata stream information sending controlling means for arranging into one stream, and assembling into packets, a plurality of metadata stream information units each of which is information on each metadata stream and for adding to each packet an identifier indicating that the metadata stream information is included, the metadata stream information including at least one of information on a data amount of a metadata stream corresponding thereto and information on description contents of the corresponding metadata stream; and sending means for sending the packets including the metadata stream information to a transmission line before sending the packets including the metadata streams.

To achieve the above objects, there is provided a metadata sending apparatus comprising: storing means for storing a plurality of metadata streams describing the substance of contents and metadata stream information that is information on each of the metadata streams, the metadata stream information stored in the storing means including at least one of information on a data amount of a metadata stream corresponding thereto and information on description contents of the corresponding metadata stream; first sending means for sending the metadata stream information, which is read from the storing means, to a transmission line in response to a request from a receiving end; and second sending means for reading from the storing means the metadata stream requested by the receiving end based on the metadata stream information that was sent and sending the metadata stream that was read to the transmission line.

To achieve the above objects, there is provided a metadata sending apparatus comprising: storing means for storing a plurality of metadata streams describing the substance of contents and metadata stream information that is information on each of the metadata streams, the metadata stream information stored in the storing means including at least one of information on a data amount of a metadata stream corresponding thereto and information on description contents of the corresponding metadata stream; first sending means for assembling into packets the metadata stream information read from the storing means and sending the packets to a transmission line in response to a request from a receiving end; and second sending means for reading from the storing means the metadata stream requested by the receiving end based on the metadata stream information that was sent, assembling into packets the metadata stream that was read, and sending the packets to the transmission line.

To achieve the above objects, there is provided a metadata transmitting method for transmitting a plurality of metadata streams generated by dividing metadata describing the substance of contents and for transmitting information on each of the metadata streams as metadata stream information, the metadata stream information including at least one of information on a data amount of a metadata stream corresponding thereto and information on description contents of the corresponding metadata stream.

To achieve the above objects, there is provided a metadata transmitting method for transmitting a plurality of metadata streams describing the substance of contents and for transmitting information on each of the metadata streams as metadata stream information, the metadata stream information including at least one of information on a data amount of a metadata stream corresponding thereto and information on description contents of the corresponding metadata stream.

In a preferred embodiment of the present invention, at least one of metadata stream information units includes depended information specifying other metadata streams to be associated with the corresponding metadata stream.

In a preferred embodiment of the present invention, each of the metadata streams and each unit of the metadata stream information are transmitted in packets, an identifier indicating that the metadata stream is included is added to a packet including the metadata stream and an identifier indicating that the metadata stream information is included is added to a packet including the metadata stream information, and the packets including the metadata stream information are transmitted before the packets including the metadata stream information are transmitted.

In a preferred embodiment of the present invention, each of the metadata streams and each unit of the metadata stream information are transmitted in packets, an identifier indicating that the metadata stream is included and an identifier identifying the metadata stream are added to a packet including the metadata stream and an identifier indicating that the metadata stream information is included is added to a packet including the metadata stream information, and the packets including the metadata stream information are transmitted before the packets including the metadata streams are transmitted.

To achieve the above objects, there is provided a metadata transmitting method for transmitting a metadata stream describing the substance of contents and metadata stream information that is information on the metadata stream in response to a request from a receiving end, the metadata transmitting method comprising the steps of: in response to the request from the receiving end, transmitting the metadata stream information including at least one of information on a data amount of a metadata stream corresponding thereto and information on description contents of the corresponding metadata stream; and based on the metadata stream information that was transmitted, transmitting the metadata stream requested by the receiving end.

To achieve the above objects, there is provided a metadata transmitting method for transmitting a metadata stream describing the substance of contents and metadata stream information that is information on the metadata stream in response to a request from a receiving end, the metadata transmitting method comprising the steps of: in response to the request from the receiving end, transmitting the metadata stream information including at least one of information on a data amount of a metadata stream corresponding thereto and information on description contents of the corresponding metadata stream, both information being assembled in packets; and based on the metadata stream information that was transmitted, transmitting the metadata stream requested by the receiving end, the metadata stream being assembled in packets.

The nature, principle and utility of the invention will become more apparent from the following detailed description when read in conjunction with the accompanying drawings.

### BRIEF DESCRIPTION OF THE DRAWINGS

In the accompanying drawings:
FIG.1 is a diagram showing the flow of metadata transmission processing in a first embodiment of the present invention;
FIG. 2 is a diagram showing the configuration of contents data and metadata sending apparatus in the first embodiment of the present invention;
FIG.3 is a diagram showing the configuration of a first example of the contents data and metadata receiving apparatus in the first embodiment of the present invention;
FIG.4 is a diagram showing an example of item definition of metadata stream information in XML schema format used in the present invention;
FIG.5 is a diagram showing the definition of QNameList that appears in the item definition example of metadata stream information in XML schema format shown in FIG.4;
FIG.6 is a diagram showing the definition of DependedStreamsType that appears in the item definition example of metadata stream information in XML schema format shown in FIG.4.
FIG. 7 is a diagram showing an example of item definition of metadata stream information in binary format used in the present invention;
FIG.8 is a diagram showing the definition of QNameList that appears in the item definition example of metadata stream information in binary format shown in FIG.7;
FIG.9 is a diagram showing the definition of DependedStreams that appears in the item definition example of metadata stream information in binary format shown in FIG.7;
FIG.10 is a diagram showing the flow of metadata transmission processing in a second embodiment of the present invention;
FIG. 11 is a diagram showing the configuration of contents data and metadata sending apparatus in the second embodiment of the present invention;
FIG. 12 is a diagram showing the configuration of a first example of the contents data and metadata receiving apparatus in the second embodiment of the present invention;
FIG.13 is a diagram showing the definition of ConnectionsType that appears in the item definition example of metadata stream information in XML schema format shown in FIG.4.
FIG.14 is a diagram showing the definition of Connections that appears in the item definition example of metadata stream information in binary format shown in FIG.7;
FIG.15 is a conceptual diagram showing the flow of an example of packet assembly processing of metadata streams and metadata stream information in the first embodiment of the present invention;
FIG.16 is a conceptual diagram showing the flow of another example of packet assembly processing of metadata streams and metadata stream information in the first embodiment of the present invention;
FIG.17 is a diagram showing the configuration of a second example of the contents data and metadata receiving apparatus in the first embodiment of the present invention;
FIG.18 is a diagram showing the flow of metadata stream requirement checking in the first and second embodiments of the present invention;
FIG.19 is a diagram showing the configuration of a third example of the contents data and metadata receiving apparatus in the first embodiment of the present invention;
FIG.20 is a diagram showing the configuration of a metadata stream selecting/merging unit of the contents data and metadata receiving apparatus in the first embodiment of the present invention;
FIG.21 is a diagram showing the flow of processing executed by the metadata stream selecting/merging unit of the contents data and metadata receiving apparatus in the first embodiment of the present invention;
FIG.22 is a diagram showing the configuration of a second example of the contents data and metadata receiving apparatus in the second embodiment of the present invention;
FIG.23 is a diagram showing the configuration of a metadata stream receiving/merging unit of the contents data and metadata receiving apparatus in the second embodiment of the present invention; and
FIG.24 is a diagram showing the flow of processing executed by the metadata stream receiving/merging unit of the contents data and metadata receiving apparatus in the second embodiment of the present invention.

### DESCRIPTION OF THE PREFERRED EMBODIMENTS

When transmitting metadata describing the substance of contents, a metadata transmitting/receiving system according to the present invention transmits metadata as a plurality of streams (metadata streams) (or divides one piece of metadata into a plurality of metadata streams). Before transmitting metadata streams, the system transmits information about metadata streams (metadata stream information) to allow the receiving end to selectively receive metadata streams based on the metadata stream information.

When selectively receiving metadata streams, the receiving end receives only the metadata streams including required metadata or only the metadata streams that may be received and processed by the receiving apparatus.

Metadata stream information includes information necessary for such selective reception.

### <<<First embodiment (for use primarily in broadcasting mode)>>>>

A first embodiment of a metadata transmitting/receiving system according to the present invention will be described.

The first embodiment is a push-type data transmitting/receiving system such as the one used in digital broadcasting. In transmitting data, a plurality of metadata streams and a plurality of metadata stream information units are transmitted.

### <Processing flow>

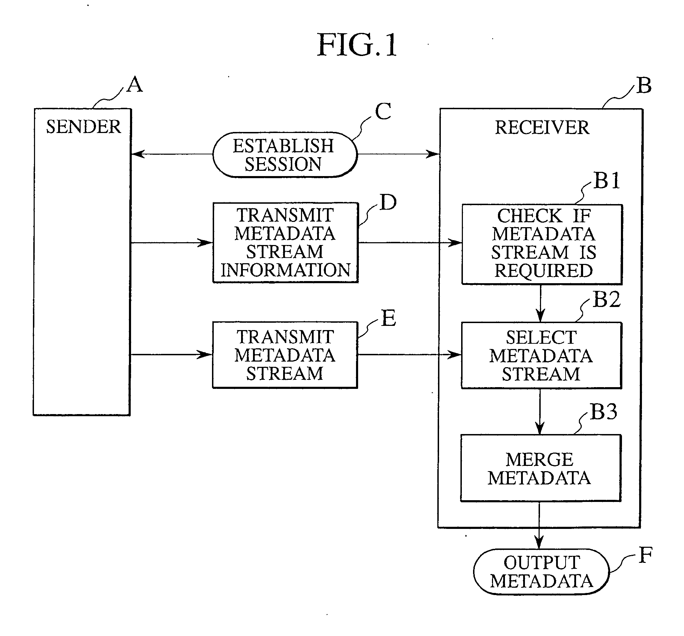

First, with reference to FIG.1, the flow of metadata transmission processing in the first embodiment will be described.

First, a session is established [C] between sender (sending end) **A** and receiver (receiving end) **B**.

Next, metadata stream information is transmitted [D] from sender **A** to receiver **B**. One unit of metadata stream information is provided for each of the plurality of metadata streams. All metadata stream information is transmitted.

Receiver **B** interprets the received metadata stream information and checks whether or not the corresponding metadata stream is required [B1].

After that, a plurality of metadata streams are transmitted [E] from sender **A** to receiver **B**. Receiver **B** selects [B2] metadata streams from the received metadata streams based on the requirement checking that was made previously. In addition, the receiver **B** merges only the required metadata streams [B3] and outputs the result as metadata [F].

### <<Sending/receiving apparatus in the first embodiment>>

Next, contents data and metadata sending apparatus and a contents data and metadata receiving apparatus in the first embodiment will be described. The sending apparatus and the receiving apparatus send and receive data via broadcasting.

### <Example of sending apparatus in the first embodiment>

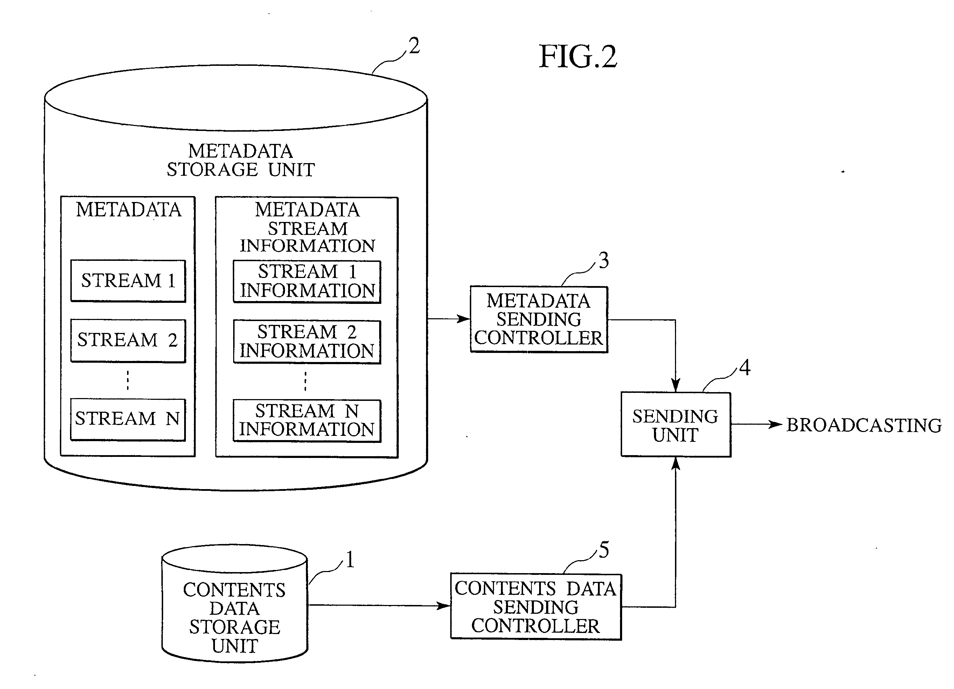

FIG.2 is a diagram showing the configuration of the contents data and metadata sending apparatus in the first embodiment.

Referring to FIG. 2, a contents data storage unit 1 stores therein contents data such as programs sent via digital broadcasting.

A metadata storage unit 2 stores metadata, which corresponds to the contents stored in the contents data storage unit 1, as a plurality of streams (metadata streams 1, 2, ..., N). The metadata storage unit 2 also stores metadata stream information (stream 1 information, stream 2 information, ..., stream N information) on each of the plurality of metadata streams (metadata stream 1, 2, ..., N).

A metadata sending controller 3 arranges the plurality of metadata streams (metadata streams 1, 2, ..., N) and the plurality of metadata stream information units (stream 1 information, stream 2 information , ..., stream N information), both of which are stored in the metadata storage unit 2, into one stream and outputs the stream to a sending unit 4 as packets.

At this time, an identifier indicating that a metadata stream is included is attached to a packet that contains a metadata stream. Also, an identifier indicating that metadata stream information is included is attached to a packet that contains metadata stream information.

A contents data sending controller 5 assembles packets from the contents data stored in the contents data storage unit 1 and outputs the assembled packets to the sending unit 4.

At this time, an identifier indicating that a packet contains contents data is attached to the packet.

The sending unit 4 multiplexes the packets output from the metadata sending controller 3 and the packets output from the contents data sending controller 5 and sends the multiplexed data as broadcasting data.

### <MPEG-2 TS packet>

For example, an MPEG-2 system is used as the packet transmission system. In the MPEG-2 system, data is transmitted by time-division multiplexing plural types of TS packets in one transport stream (TS).

When the MPEG-2 system is used in the system according to the present invention, the packet described above corresponds to a TS packet in the MPEG-2 system. The TS header of a TS packet includes the packet identifier (PID).

The PID is used as an identifier indicating that the packet includes a metadata stream, metadata stream information, or contents data.

### <<Description of metadata stream>>

Next, metadata streams stored in the metadata storage unit 2 will be described in detail.

### <Contents of metadata>

Metadata includes (1) basic information such as contents title, creator, and copyright information (2) summary information outlining the contents and (3) segment information describing the contents structure.

Summary information given as (2) above, which briefly informs the audience of contents outline, includes key image information and key audio information.

Segment information given as (3) above, which is used to structure the contents by dividing them into segments in chronological order, includes (3-1) basic segment information such as segment start/end times and areas (3-2) segment comment information describing the segment contents in text format and (3-3) various descriptors describing the features of audio and video signals of the segment.

### <Dividing metadata into metadata streams>

Metadata streams are generated by dividing metadata according to the classification described above. Alternatively, metadata streams are generated from metadata already created according to the classification described above.

In the description below, assume that metadata is divided into the following six streams: (1) basic information (2) summary information (3-1) basic segment information (3-2) segment comment information (3-3a) segment audio descriptors and (3-3v) segment video descriptors. Of course, metadata stream may be divided according to some other classification or according to more detailed classification.

### <Merging information>

When metadata is tree-structured, merging information must be embedded into a metadata stream so that the receiving end can merge a plurality of metadata streams to generate original metadata.

Each metadata stream includes one or more sub-tree data units generated by dividing structured metadata.

For each sub-tree data unit, reference information referring to lower-level sub-tree data is embedded into the connection node of higher-level sub-tree data that has been divided.

The reference information is composed of the following two: one is an ID or URI (Uniform Resource Identifier) indicating the metadata stream in which lower-level sub-tree data is included and the other is an integer value identifying one of a plurality of sub-tree data units included in the metadata stream.

### <<Contents of metadata stream information>>

Next, the contents of metadata stream information will be described.

Metadata stream information comprises the following elements: (1) ID identifying a metadata stream (2) URI indicating the location of the metadata stream (3) metadata stream size in bytes (information on metadata stream data amount) (4) last update date/time of the metadata stream (5) list of metadata items to be included in the metadata stream (6) list of metadata items to be excluded from the metadata stream (7) list of other depended metadata streams (depended information) and (8) list of highest-level items of sub-tree data (only when the metadata is tree-structured).

Elements (4)-(6) described above are information on the description contents of a metadata stream.

Element (7), which is a list of other depended metadata streams, is a list of IDs or URIs identifying other metadata streams when the metadata stream depends on other metadata streams and when the depending metadata stream is meaningless unless those other metadata streams are received at the same time. A metadata stream is said to be depended on other metadata streams when a metadata item included in the metadata stream references a metadata item included in some other metadata streams or, in a structured metadata, when the higher-level sub-tree data of sub-tree data in the metadata stream is included in some other metadata streams.

Metadata stream merge information may also be included in metadata stream information.

In this case, merge information is node path information which corresponds to the highest node of the sub-trees included in the metadata stream and which is node path information used for the metadata tree structure that will be generated by merging. Path information is described using XPath (XML Path Language).

Note that, when metadata stream information includes metadata stream merge information, a metadata stream need not include metadata stream merge information.

### <Format example>

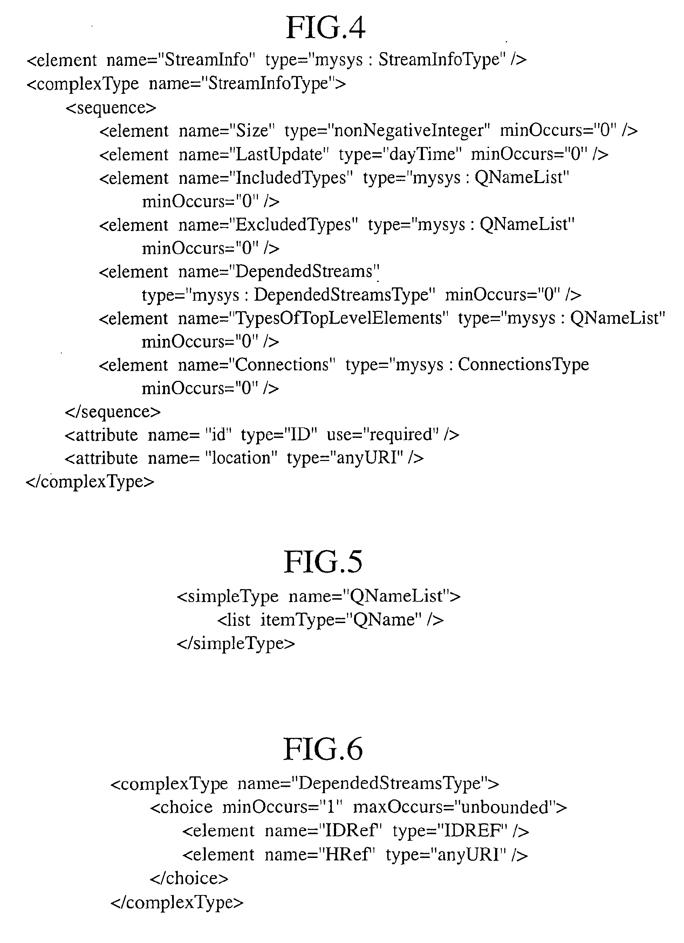

FIG.4 shows an example of the format of metadata stream information according to the present invention.

This is an example of XML (Extensible Markup Language) schema based definition of the items included in metadata stream information that is coded in the XML data format.

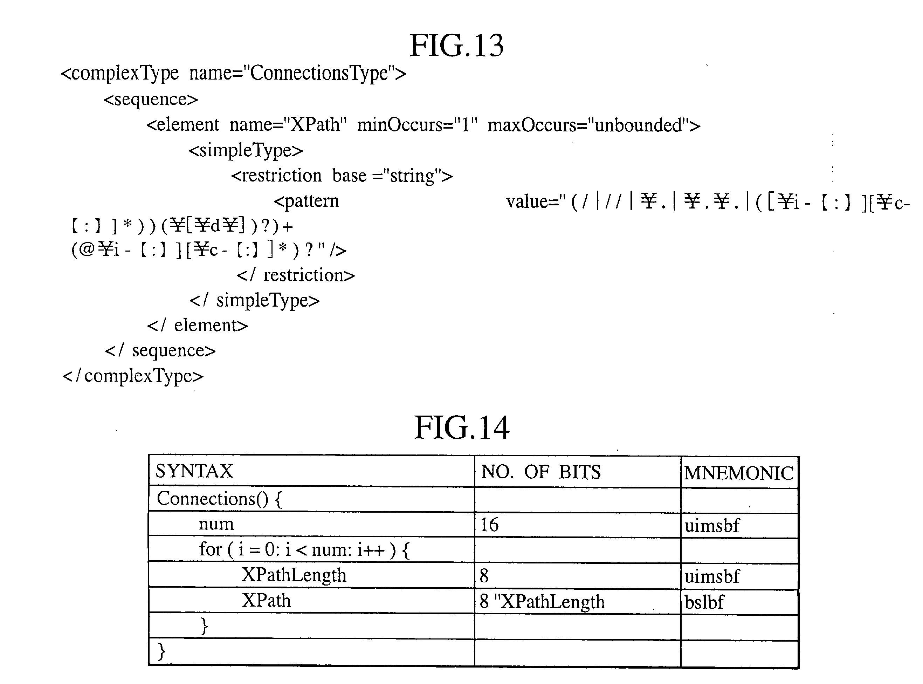

FIGS.5, 6, and 13 are the definitions of QNameList, DependedStreamsType, and ConnectionsType, respectively, that appear in the example of XML-schema-based item definition of the metadata stream information shown in FIG.4.

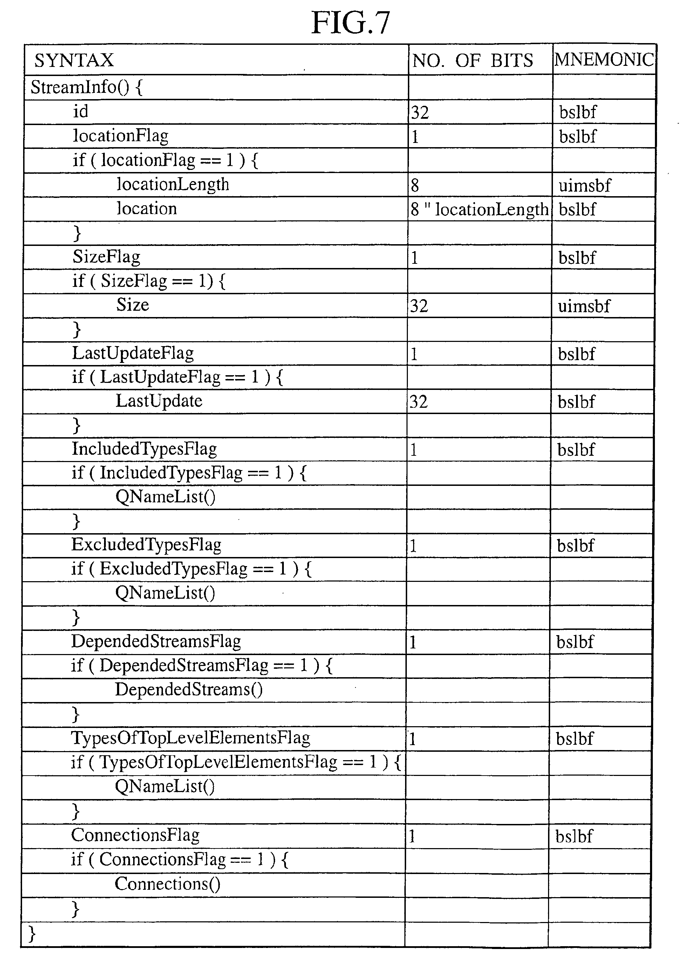

FIG.7 shows another example of the format of metadata stream information according to the present invention.

This is an example of binary-based definition of the items included in metadata stream information that is coded in the binary data format.

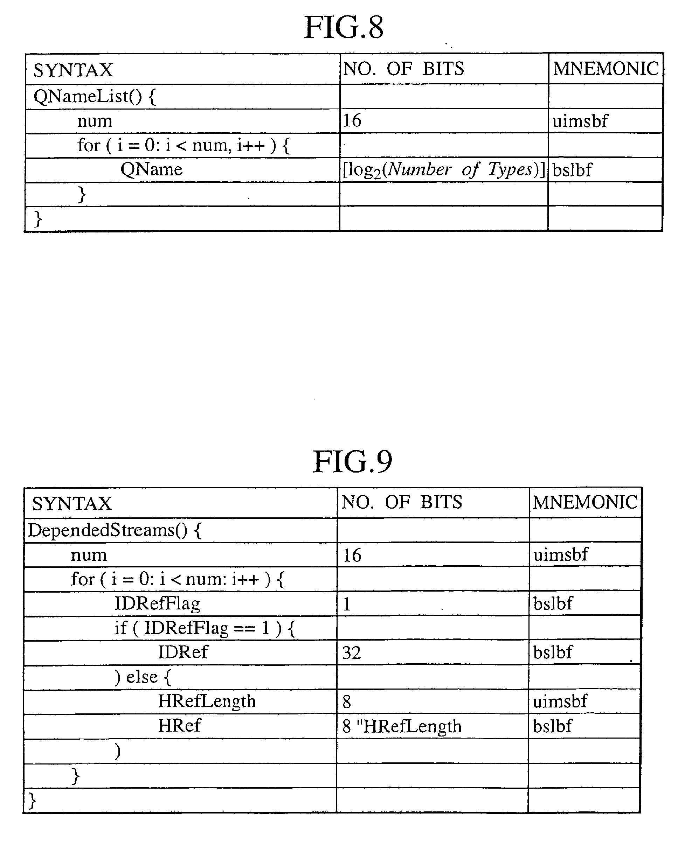

FIGS.8, 9, and 14 are the definitions of QNameList, DependedStreams, and Connections, respectively, that appear in the example of binary-based item definition of the metadata stream information shown in FIG.7.

### <<Assembling packets of streams>>

Next, the operation of the metadata sending controller 3 of the contents data and metadata sending apparatus shown in FIG.2 will be described more in detail.

The metadata sending controller 3 arranges a plurality of metadata streams and a plurality of metadata stream information units into one stream and assembles packets for them for transmission.

### <Example of packet generation>

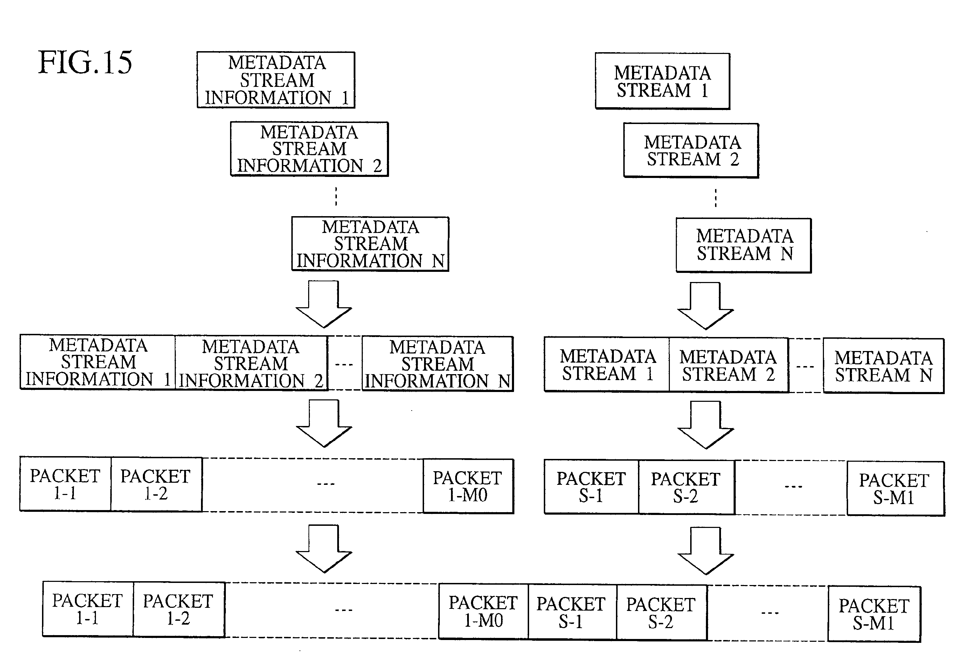

FIG.15 is a conceptual diagram showing the flow of an example of packet assembly processing for metadata streams and metadata stream information.

First, a plurality of metadata streams (metadata streams 1, 2, ..., N) and a plurality of metadata stream information units (stream 1 information, stream 2 information, ..., stream N information) are each arranged into one stream.

Next, each stream is divided into predetermined-size packets. At this time, an identifier indicating that a metadata stream is included is added to a packet including a metadata stream, and an identifier indicating that metadata stream information is included is added to a packet including metadata stream information.

The size of a packet, dependent on the transmission system, does not depend on the size of a metadata stream or metadata stream information.

After that, the packets of two streams are arranged such that the packets including metadata stream information precede the packets including metadata streams.

Finally, the stream of the arranged packets is output to the sending unit 4 of the contents data and metadata sending apparatus shown in FIG.2.

### <Another example of packet assembly>

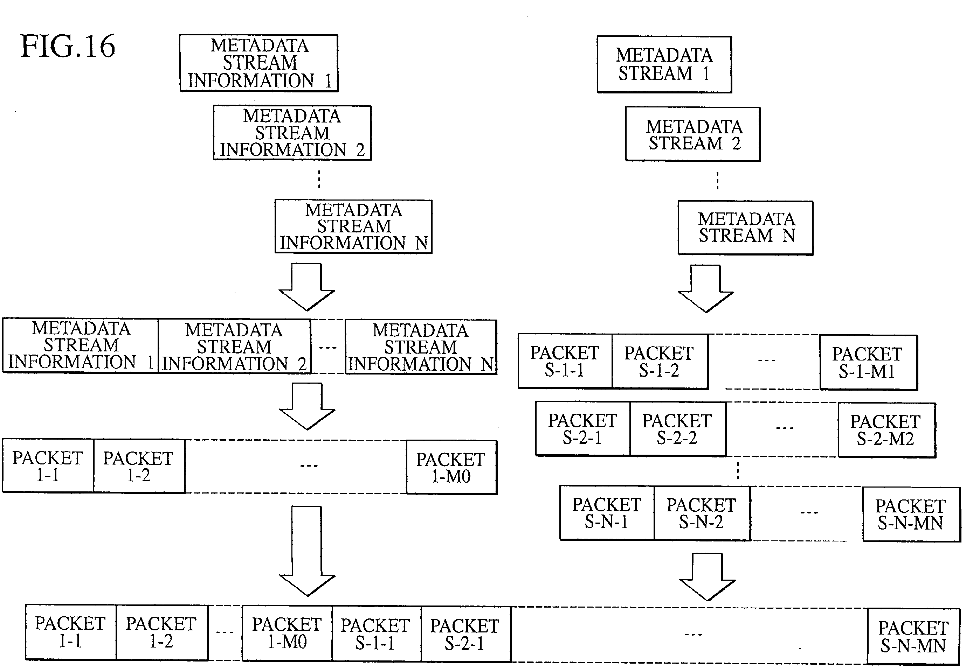

FIG.16 is a conceptual diagram showing the flow of another example of packet assembly processing for metadata streams and metadata stream information.

In this example, a plurality of metadata stream information units are arranged into one stream and then the stream is divided into predetermined-size packets. At this time, an identifier indicating that metadata stream information is included is added to each packet.

On the other hand, a plurality of metadata streams are each divided into predetermined-size packets. At this time, an identifier is added to each packet indicating that ametadata stream is included and that which of the plurality of metadata streams is included (Two identifiers may also be added, one for indicating that a metadata stream is included and the other for indicating which of metadata streams is included.)

After that, the metadata stream information packets and the metadata stream packets are arranged into one stream. At this time, the metadata stream information packets and the metadata stream packets are multiplexed, the former being placed before the latter. Again, in this example, the size of a packet, dependent on the transmission system, does not depend on the size of a metadata stream or metadata stream information.

Finally, the packets arranged into one stream are output to the sending unit 4 of the contents data and metadata sending apparatus shown in FIG.2.

### <First example of receiving apparatus in the first embodiment>

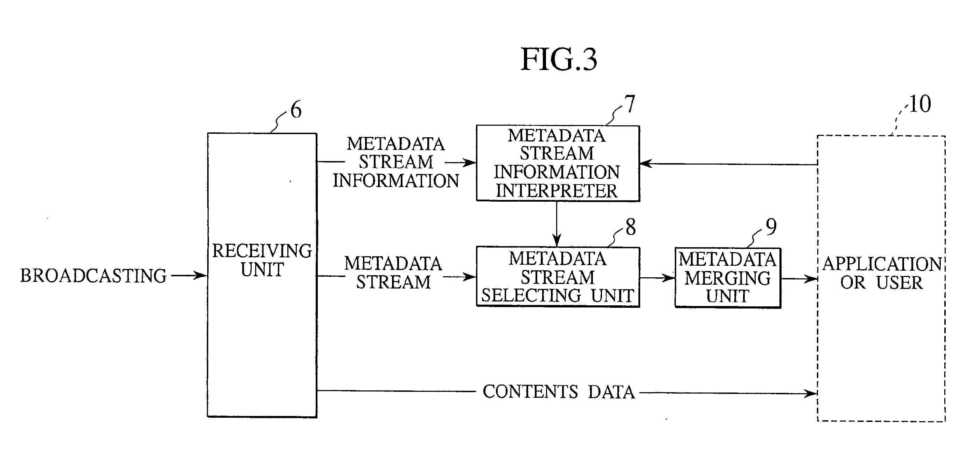

FIG.3 is a diagram showing the configuration of a first example of the contents data/metadata receiving apparatus in the first embodiment.

Referring to FIG.3, a receiving unit 6 disassembles packets received via broadcasting and separates the resulting stream into metadata stream information, metadata streams, and contents data for output (separates stream data into the three based on the identifier added to each packet).

A metadata stream information interpreter 7 interprets metadata stream information output from the receiving unit 6, checks if each metadata stream is required, and outputs the resulting requirement information to a metadata stream selecting unit 8. At this time, the requirement checking may also be made based on the checking criteria specified by an application or user 10.

Based on the requirement information on each metadata stream received from the metadata stream information interpreter 7, the metadata stream selecting unit 8 checks the requirement of metadata streams output by the receiving unit 6, and outputs only the required metadata streams to a metadata merging unit 9. Metadata streams not required are discarded.

The metadata merging unit 9 merges metadata streams output by the metadata stream selecting unit 8 and outputs the generated metadata to the application or user 10.

The application or user 10 uses the metadata output by the metadata merging unit 9 and the contents data output by the receiving unit 6 for its respective purpose.

### <Second example of receiving apparatus in the first embodiment >

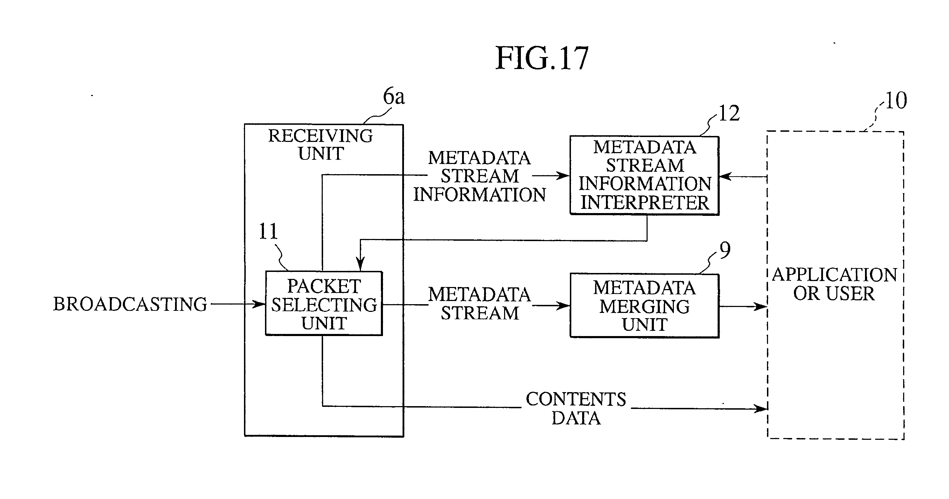

FIG.17 is a diagram showing the configuration of a second example of the contents data and metadata receiving apparatus in the first embodiment.

This configuration is used only when a plurality of metadata stream information units are assembled into packets and when each of a plurality of metadata streams are assembled into packets (that is, when an identifier indicating which of the plurality of metadata streams is included is added to a packet), as shown in FIG.16, when metadata streams and metadata stream information are assembled into packets.

Referring to FIG.17, a receiving unit 6a includes a packet selecting unit 11.

The packet selecting unit 11 separates the packets, received via broadcasting, into three: packets including metadata stream information, packets including metadata streams, and packets including contents data (separates the packets into the three based on the identifier added to each packet). The packet selecting unit 11 then outputs metadata stream information, which is obtained by disassembling the packets including metadata stream information, to a metadata stream information interpreter 12.

The packet selecting unit 11 also outputs contents data, which is obtained by disassembling the packets including contents data, to the application or user 10.

The metadata stream information interpreter 12 interprets metadata stream information output by the packet selecting unit 11 of the receiving unit 6a, checks each metadata stream if it is required, and outputs the resulting requirement information to the packet selecting unit 11 of the receiving unit 6a. At this time, the requirement checking may also be made based on checking criteria specified by the application or user 10.

Based on the requirement checking information, the packet selecting unit 11 outputs metadata streams, obtained by disassembling the packets including the required metadata streams, to the metadata merging unit 9 and discards the packets including metadata streams that are not required. The discrimination between the packets including metadata streams that are required and the packets including metadata streams that are not required is made based on the identifier added to each packet that indicates which of the plurality of metadata streams is included.

The metadata merging unit 9 merges the metadata streams output by the packet selecting unit 11 of the receiving unit 6a and outputs the generated metadata to the application or user 10. The application or user 10 uses the metadata output by the metadata merging unit 9 and the contents data output by the packet selecting unit 11 of the receiving unit 6a for its respective purpose.

### <Selection method>

Next, how the metadata stream information interpreter 7 or 12 in FIG.3 or FIG.17 checks metadata stream requirement will be described more in detail.

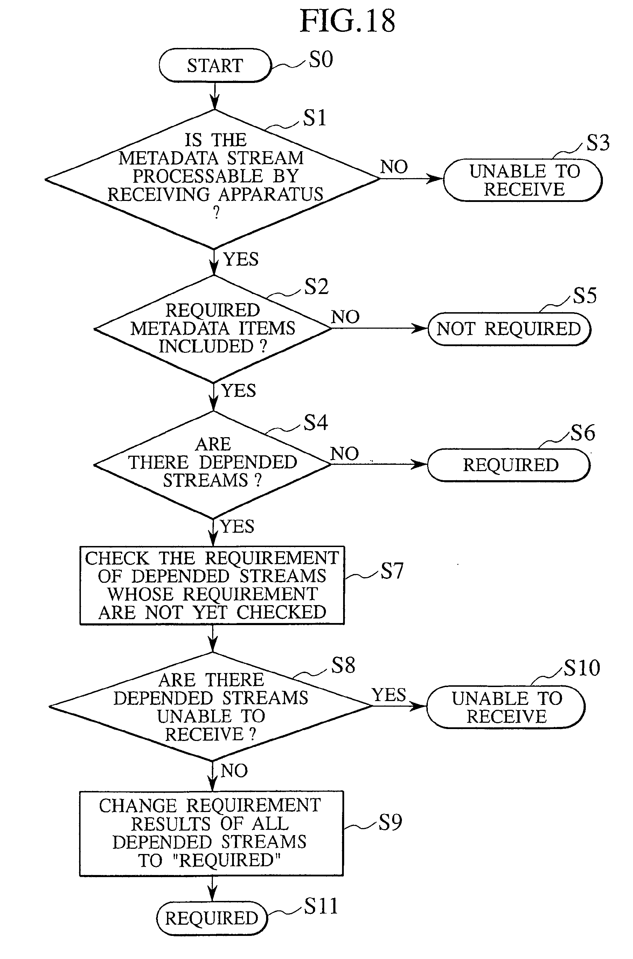

FIG.18 is a diagram showing the flow of metadata stream requirement checking processing.

Referring to FIG.18, when the requirement checking is started [S0], the metadata stream size information (information on the data amount of the metadata stream) included in the metadata stream information is first checked to see if the metadata stream may be processed by the receiving unit 6 or 6a [S1]. If the receiving unit 6 or 6a can process the metadata stream [Yes in S1], control is passed to the next step [S2]; if the receiving unit 6 or 6a cannot process the metadata stream [No in S1], the processing is terminated assuming that the receiving unit is "unable to receive" [S3].

Next, based on the information on metadata items to be included in the metadata stream and the information on metadata items to be excluded from the metadata stream that are included in the metadata stream information (information on metadata stream description contents), a check is made if the metadata items required by the application or user are included [S2]. If the required metadata items are included [Yes in S2], control is passed to the next step [S4]; if the required metadata items are not included [No in S2], the processing is terminated assuming that the metadata stream is "not required" [S5].

Then, based on the list information on other depended metadata streams (depended information), a check is made if there is another depended metadata stream [S4]. In some cases, there are a plurality of other depended metadata streams. If there is another depended metadata stream [Yes in S4], control is passed to the next step [S7]; if there is no other depended metadata stream [No in S4], the processing is terminated assuming that the metadata stream is "required" [S6].

After that, the requirement checking is made for the other depended metadata streams for which the requirement checking is not yet made [S7].

Next, a check is made if there are other dependedmetadata streams that cannot be received [S8]. If there is no other depended metadata stream that cannot be received [No in S8], control is passed to the next step [S9]; if there are other depended metadata streams that cannot be received [Yes in S8], the processing is terminated assuming that the metadata stream is "unable to be received" [S10].

Then, the requirement checking results of all other depended streams are set to "required" [S9]. Finally, the requirement result is set to "required" and the processing is terminated [S11].

### <Third example of receiving apparatus in the first embodiment>

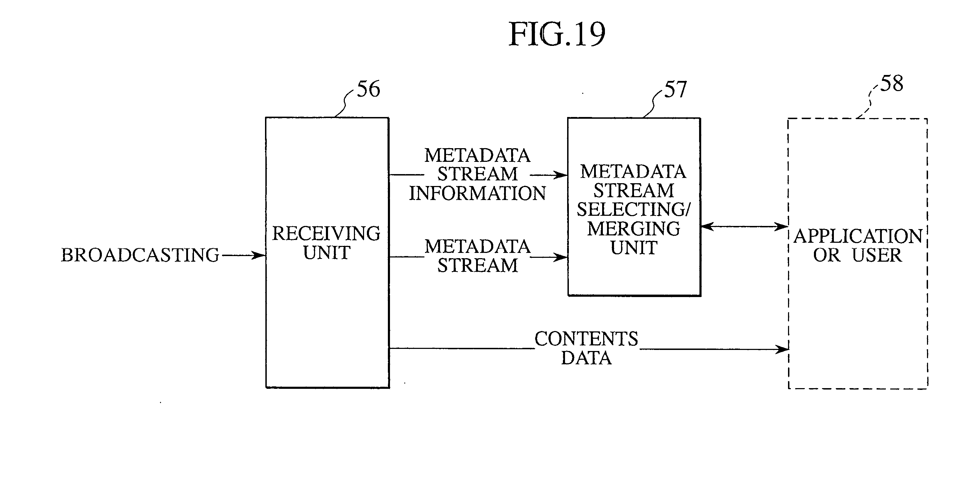

FIG.19 is a diagram showing the configuration of a third example of the contents data/metadata receiving apparatus in the first embodiment. In this example, the receiving apparatus is implemented by a computer into which a metadata receiving program has been read.

Referring to FIG.19, a receiving unit 56 disassembles packets received via broadcasting and separates the obtained streams into metadata stream information, metadata streams, and contents data for output (separates stream data into the three based on an identifier added to each packet).

A metadata stream selecting/merging unit 57 interprets metadata stream information output by the receiving unit 56 and checks the requirement of each metadata stream. At this time, the requirement checking may also be made based on checking criteria specified by an application or user 58.

In addition, based on the requirement of each metadata stream, the metadata stream selecting/merging unit 57 selects from metadata streams output by the receiving unit 56, holds only metadata streams that are required, and discards metadata streams that are not required.

In addition, the metadata stream selecting/merging unit 57 merges the metadata streams that are held and outputs the generated metadata to the application or user 58. The application or user 58 uses the metadata output by the metadata stream selecting/merging unit 57 and the contents data output by the receiving unit 56 for its respective purpose.

### <<Details of metadata stream selecting/merging unit>>

Next, the details of the metadata stream selecting/merging unit 57 of the contents data and metadata receiving apparatus in FIG.19 will be described.

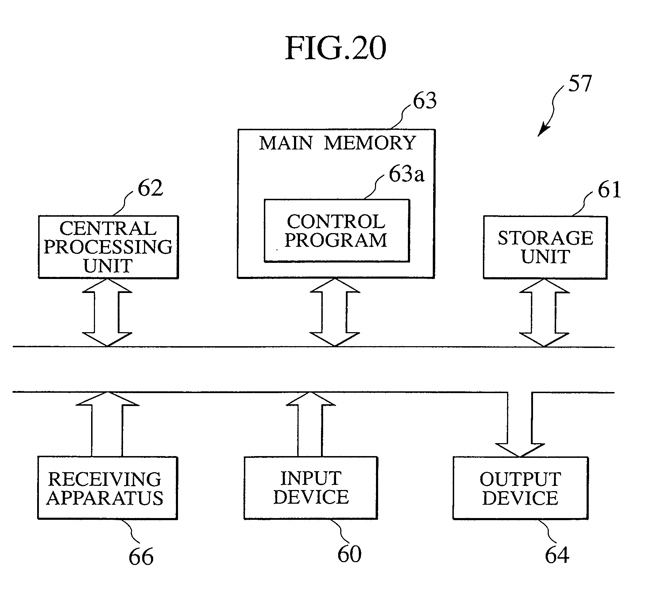

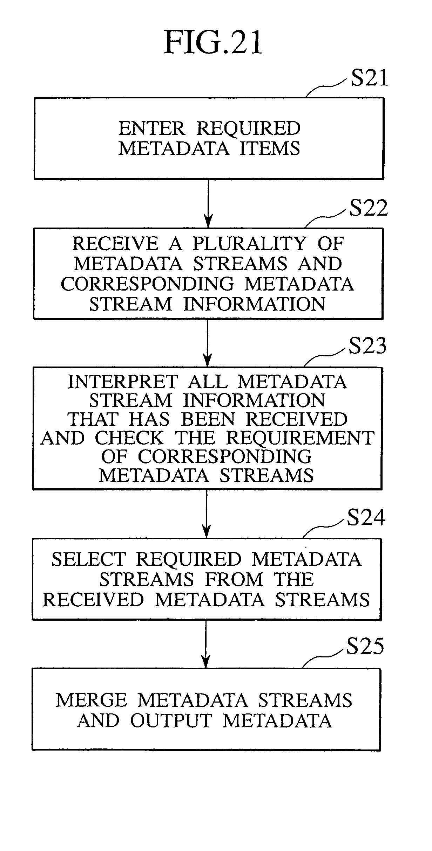

FIG.20 is a diagram showing the configuration of the metadata stream selecting/merging unit 57 of the contents data and metadata receiving apparatus in the first embodiment of the present invention. FIG.21 shows the flow of processing executed by the metadata stream selecting/merging unit 57.

### <Flow of selecting/merging processing>

First, the application or user 58 (FIG.19) uses an input device 60 to enter metadata items required for metadata stream selection [S21]. The entered required metadata items are stored in a storage unit 61.

Next, a receiving apparatus 66 (receiving unit 56) receives a plurality of metadata streams and the corresponding metadata stream information [S22].

The received metadata streams and the metadata stream information are stored in the storage unit 61. In response to an instruction from a control program (metadata receiving program) 63a in a main memory 63, a central processing unit 62 sequentially reads metadata stream information from the storage unit 61, interprets all metadata stream information that has been received, and checks if corresponding metadata streams are required [S23]. At this time, the required metadata items stored in the storage unit 61 are used as the criteria for checking the requirement.

Then, allmetadata streams, which are judged as required, are selected from the received metadata streams and read from the storage unit 61 [S24]. Those metadata streams are merged into metadata, and all metadata streams, which are judged as non-required, are erased from the storage unit 61.

The generated metadata is output from an output device 64 to the application or user [S25].

### <Flow of requirement checking processing>

The flow of metadata stream requirement checking, which is a part of the flow of processing executed by the metadata stream selecting/merging unit 57 shown in FIG.19 is the same as the flow of metadata stream requirement checking shown in FIG.18. Therefore, the description is omitted here.

### <<<Second embodiment (for use primarily in Internet mode)>>>

Next, a second embodiment of a metadata transmitting/receiving system according to the present invention will be described.

The second embodiment is a pull-type data transmitting/receiving system such as the one used on the Internet. In transmitting data, a plurality of metadata streams and a plurality of metadata stream information units are transmitted.

### <<Processing flow>>

First, the flow of metadata transmission processing in the second embodiment will be described.

### <Obtaining metadata stream URI>

It is assumed that, before transmitting metadata, the receiving end knows the URI indicating the location of required metadata streams and contents data. For example, the URIs of metadata streams and contents data may be obtained from a contents provider site on the Internet or from a medium such as a magazine, book, or CD-ROM. In digital broadcasting, it is possible to obtain the URIs of metadata streams corresponding to each program from a TV information publication and then to obtain metadata via the Internet. Using any of the methods described above, the receiving end obtains the URIs of required one or more metadata streams and contents data.

### <Processing flow>

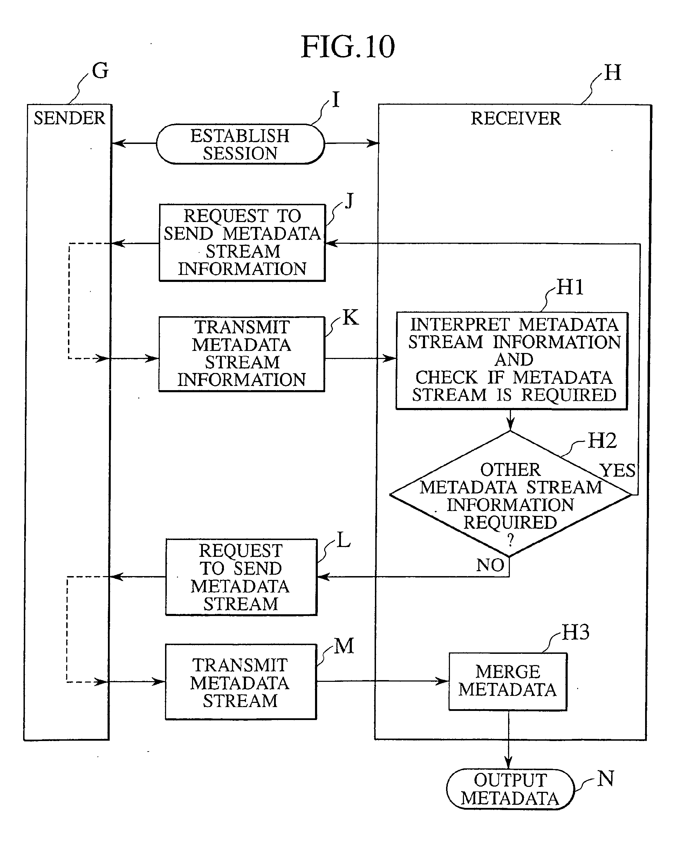

FIG.10 is a diagram showing the flow of metadata transmission processing in the second embodiment.

First, a session is established between a sender (sending end) G and a receiver (receiving end) H [I].

After that, the receiver H requests the sender G to send metadata stream information corresponding to a metadata stream by specifying the URI indicating the location of the metadata stream [J]. The sender G transmits (sends) the requested metadata stream information to the receiver H [K].

Then, the receiver H interprets the received metadata stream information and checks the requirement for the corresponding metadata stream [H1] (Interpretation and requirement checking are executed, for example, according to the flow shown in FIG.18). After the requirement checking, a check is made if there is still other metadata stream information that is required [H2]. If other metadata stream information is required [Yes in H2], the receiver H requests the sender G again to send metadata stream information [J].

If there is no other metadata stream information that is required [No in H2], the receiver H requests the sender G to send all required metadata streams [L].

The sender G transmits (sends) all requested metadata streams to the receiver H [M].

After that, the receiver H merges all received metadata streams [H3] and output metadata [N].

### <<Sending/receiving apparatus in the second embodiment>>

Next, a contents data and metadata sending apparatus and a contents data and metadata receiving apparatus in the second embodiment will be described. The sending apparatus and the receiving apparatus transmit data over a network.

### <Example of sending apparatus in the second embodiment>

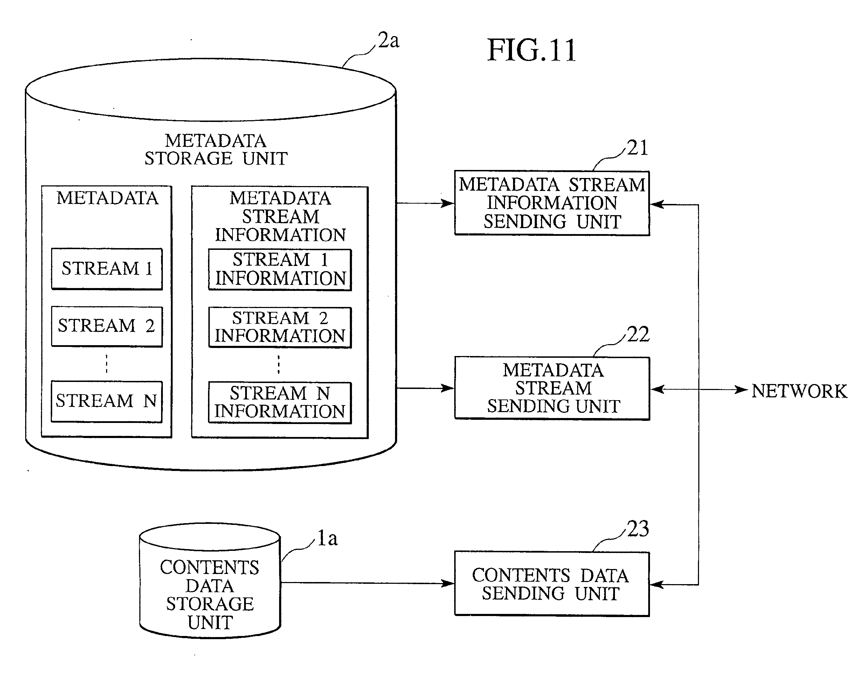

FIG.11 is a diagram showing the configuration of the contents data and metadata sending apparatus in the second embodiment.

Referring to FIG.11, a contents data storage unit 1a stores contents data such as video streams.

A metadata storage unit 2a stores a plurality of metadata streams (metadata streams 1, 2, ..., N) generated by dividing metadata, corresponding to the contents stored in the contents data storage unit 1a, into the plurality of streams. The metadata storage unit 2a also stores metadata stream information (stream 1 information, stream 2 information, ..., stream N information) on each of the plurality of metadata streams (metadata streams 1, 2, ..., N).

In response to a metadata stream information request from the receiving end with a URI specified, a metadata stream information sending unit 21 reads metadata stream information, corresponding to the metadata stream specified by the URI, and sends the metadata stream information to the receiving end (packets suitable for sending the information may be generated when the information is sent).

In response to a metadata stream request from the receiving end with a URI specified, a metadata stream sending unit 22 reads the metadata stream indicated by the URI from the metadata storage unit 2 and sends it to the receiving end (packets suitable for sending the stream may be generated when the stream is sent).

In response to a contents data request from the receiving end with a URI specified, a contents data sending unit 23 reads the contents data indicated by the URI from the contents data storage unit 1a and sends the data to the receiving end (packets suitable for sending contents data may be generated when the contents data is sent).

### <First example of receiving apparatus in the second embodiment>

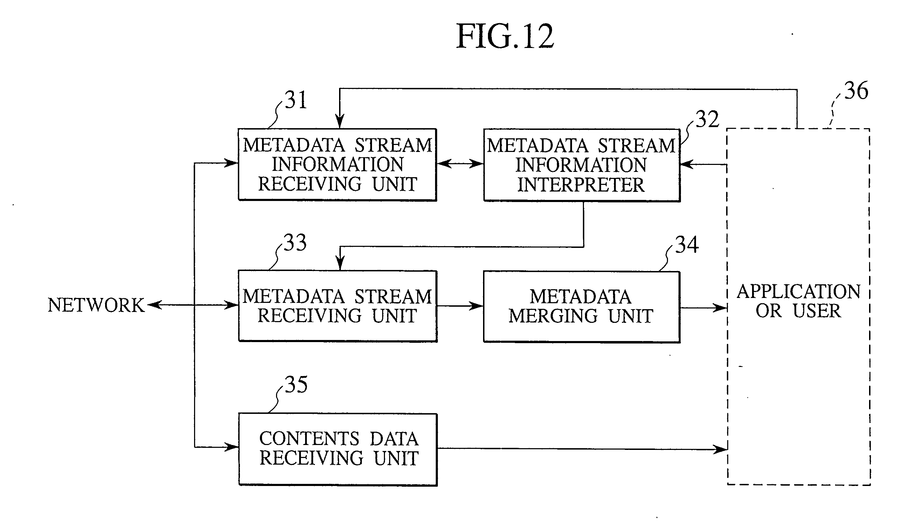

FIG.12 is a diagram showing the configuration of a first example of the contents data and metadata receiving apparatus in the second embodiment of the present invention.

Referring to FIG.12, when an instruction is received from an application or user 36 (or from a metadata stream information interpreter 32), a metadata stream information receiving unit 31 requests the sending end to send metadata stream information using an URI indicating the location of the metadata stream. The metadata stream information receiving unit 31 receives metadata stream information from the sending end and outputs it to the metadata stream information interpreter 32.

The metadata stream information interpreter 32 interprets the metadata stream information output by the metadata stream information receiving unit 31, checks the requirement of the corresponding metadata stream and, in addition, checks if other metadata stream information is required.

If there is other metadata stream information that is required, the metadata stream information interpreter 32 instructs the metadata stream information receiving unit 31 to receive metadata stream information (Interpretation and requirement checking are executed, for example, according to the flow shown in FIG.18).

If there is no other required metadata stream information, the metadata stream information interpreter 32 instructs a metadata stream receiving unit 33 to receive all required metadata streams.

The metadata stream receiving unit 33 requests the sending end to send the metadata streams, which are instructed by the metadata stream information interpreter 32 to receive, by specifying the URIs. The metadata stream receiving unit 33 receives the metadata streams sent from the sending end and outputs them to a metadata merging unit 34.

The metadata merging unit 34 merges the metadata streams output by the metadata stream receiving unit 33 and outputs the generated metadata to the application or user 36.

In response to an instruction from the application or user 36, a contents data receiving unit 35 requests the sending end to send contents data by specifying a URI, receives the contents data from the sending end, and outputs the received contents data to the application or user 36.

The application or user 36 uses the metadata output by the metadata merging unit 34 and contents data output by the contents data receiving unit 35 for its respective purpose.

The following summarizes processing in which the receiving end sends a request to send metadata stream information, the received metadata stream information is interpreted, and then requirement checking is made for the metadata stream.

It is assumed that, before a session is established with the sending end, the receiving end has obtained one or more URIs indicating the locations of required metadata streams. Once the session is established between the sending end and the receiving end, the receiving end first sends URIs to the sending end to request it to send metadata stream information corresponding to the required metadata streams.

Then, the sending end sends the requested metadata stream information to the receiving end.

After that, the receiving end interprets the metadata stream information received from the sending end to check the requirement of the corresponding metadata streams.

The detailed flow of metadata stream requirement checking is the same as that shown in FIG.18 where the first embodiment is shown. To check the requirement of other depended metadata streams, it is necessary to request and receive the corresponding metadata stream information.

### <Second example of receiving apparatus in the second embodiment>

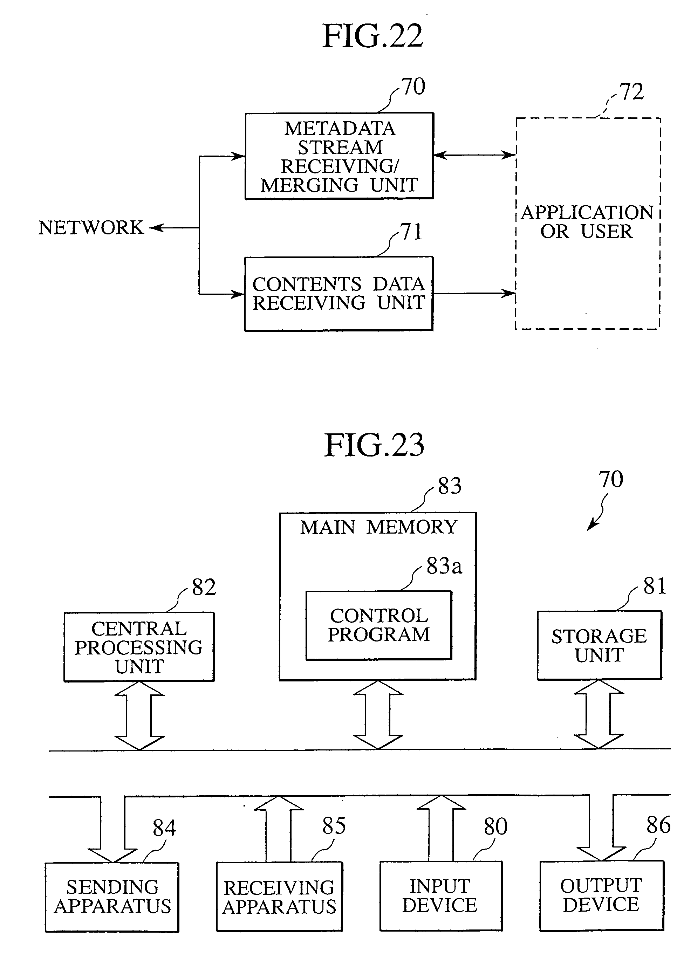

FIG.22 is a diagram showing the configuration of a second example of the contents data and metadata receiving apparatus in the second embodiment. In this example, the receiving apparatus is implemented by a computer in which a metadata receiving program has been read.

Referring to FIG.22, when an instruction is received from an application or user 72 or when a need arises during execution of the flow of metadata stream receiving/merging processing, a metadata stream receiving/merging unit 70 requests the sending end to send metadata stream information using the URI indicating the location of a metadata stream. The metadata stream receiving/merging unit 70 then receives the metadata stream information from the sending end.

In addition, the metadata stream receiving/merging unit 70 interprets the metadata stream information, checks the requirement of the corresponding metadata stream and, after that, checks the requirement of other metadata stream information.

If there is other required metadata stream information, the metadata stream receiving/merging unit 70 requests the metadata stream information, receives it, interprets it, and then checks its requirement again (Interpretation and requirement checking are executed, for example, according to the flow shown in FIG.18).

If there is no other required metadata stream information, the metadata stream receiving/merging unit 70 sends the URIs to the sending end to request it to send all required metadata streams and receives the metadata streams from the sending end.

After that, the metadata stream receiving/merging unit 70 merges the received metadata streams to generate metadata and outputs the generated metadata to the application or user.

In response to an instruction from the application or user 72, a contents data receiving unit 71 requests the sending end, with a URI specified, to send contents data, receives the contents data from the sending end, and outputs the contents data to the application or user.

The application or user 72 uses the metadata output by the metadata stream receiving/merging unit 70 and the contents data output by the contents data receiving unit 71 for its respective purpose.

### <<Details of metadata stream receiving/merging unit>>

Next, the details of the metadata stream receiving/merging unit 70 of the contents data and metadata receiving apparatus shown in FIG.22 will be described.

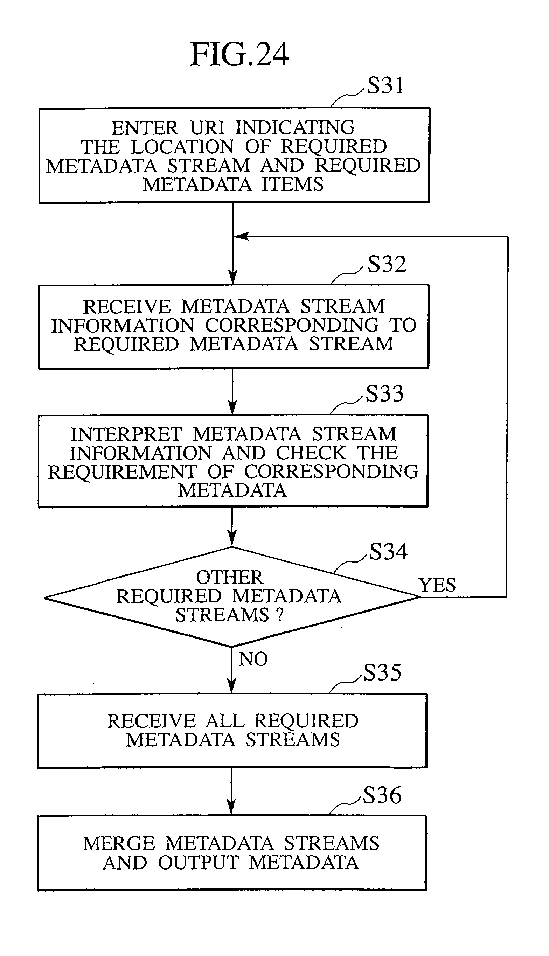

FIG.23 is a diagram showing the configuration of the metadata stream receiving/merging unit 70 of the contents data and metadata receiving apparatus in the second embodiment of the present invention. FIG.24 shows the flow of processing executed by the metadata stream receiving/merging unit 70.

### <Receiving/merging processing flow>

First, the application or user 72 (FIG.22) uses an input device 80 to enter a URI, which indicates the location of a required metadata stream, and the requiredmetadata items [S31]. The entered metadata items are stored in a storage unit 81.

Then, in response to an instruction from the control program (metadata receiving program) in a main memory 83, a central processing unit 82 instructs a sending apparatus 84 to request the sending end, using the URI specifying the location of the metadata stream, to send metadata stream information corresponding to the required metadata stream. Upon receiving the instruction from the central processing unit 82, the sending apparatus 84 requests the sending end to send the metadata stream information. A receiving apparatus 85 receives the metadata stream information from the sending end and stores it in the storage unit 81 [S32].

The central processing unit 82 interprets the metadata stream information stored in the storage unit 81 and checks the requirement of the corresponding metadata stream [S33]. At this time, the required metadata items stored in the storage unit 81 are used as the requirement checking criteria.

In addition, a check is made if there are other required metadata streams [S34]. If there are other required metadata streams [Yes in S34], the central processing unit 82 requests the corresponding metadata stream information, receives the information, interprets the information, and checks the requirement of the corresponding metadata streams [S32, S33].

If there is no other required metadata stream [Yes in S34], the central processing unit 82 instructs a sending apparatus 84 to request the sending end, using URIs that indicate the locations of metadata streams, to send all metadata streams that have been judged as required. Upon receiving the instruction from the central processing unit 82, the sending apparatus 84 requests the sending end to send a plurality of metadata streams. The receiving apparatus 85 receives the plurality of metadata streams from the sending end and stores them in the storage unit 81 [S35].

The central processing unit 82 reads the plurality of metadata streams from the storage unit 81 and merges them to generate metadata. The generated metadata is output to the application or user 72 by an output device 86 [S36].

### <Requirement checking processing flow>

The flow of metadata stream requirement checking, which is a part of the flow of processing executed by the metadata stream receiving/merging unit 70 shown in FIG.22, is the same as that of metadata stream requirement checking shown in FIG.18 in the first embodiment. The description is omitted here.

A metadata receiving program according to the present invention may be read from a computer readable recording medium, on which the program is recorded, into a computer or may be transmitted over a communication network into a computer.

The present invention includes a computer readable recording medium on which the above-described metadata receiving program is recorded.

### <<Description of metadata stream>>

The details of the contents of a metadata stream in the second embodiment are the same as those of a metadata stream in the first embodiment. The contents of metadata stream information in the second embodiment are the same as those of metadata stream information in the first embodiment.

It should be understood that many modifications and adaptations of the invention will become apparent to those skilled in the art and it is intended to encompass such obvious modifications and changes in the scope of the claims appended hereto.

As described above, the metadata receiving apparatus and the metadata receiving method according to the present invention have the following effects:
(1) Only required metadata streams may be selectively received based on received metadata stream information. Therefore, metadata may be received efficiently.
(2) If a packet including a received metadata stream has an identifier added for identifying the metadata stream, only the packets including metadata streams, which are judged as required, may be selected before the metadata stream packets are disassembled. Therefore, metadata may be received more efficiently.
(3) Depended information that specifies other metadata streams to be associated with a metadata stream corresponding to received metadata stream information, if included in the received metadata stream information, indicates that other metadata streams are required in order to use the metadata stream including required metadata. This configuration makes it possible to correctly receive a required metadata stream and other metadata streams required to use that metadata stream, making metadata reception more efficiently.
(4) Receiving metadata stream information first and then requesting the sending end to send the required metadata streams based on the received metadata stream information not only makes metadata reception efficient but also allows the sending end to transmit metadata more efficiently.
   As described above, the metadata receiving program and the computer-readable recording medium recording therein the metadata receiving program according to the present invention have the following effects:
(5) The receiving end may selectively receive only required metadata streams based on metadata stream information. Therefore, the receiving end may receive metadata efficiently.
(6) Depended information that specifies other metadata streams to be associated with a metadata stream corresponding to received metadata stream information, if included in the received metadata stream information, allows the receiving end to identify other metadata streams required for using the metadata stream including required metadata and to correctly receive the required metadata stream and other required metadata streams required for using the required metadata stream. This configuration allows the receiving end to receive metadata more efficiently.
(7) Receiving metadata stream information first and then requesting the sending end to send the required metadata streams based on the received metadata stream information not only allows the receiving end to receive metadata efficiently but also makes metadata transmission more efficient.
   As described above, the metadata sending apparatus and the metadata sending method according to the present invention have the following effects:
(8) The receiving end may selectively receive only required metadata streams based on metadata stream information. Therefore, the receiving end may receive metadata efficiently.
(9) If a packet including a metadata stream is transmitted with an identifier added for identifying the metadata stream, the receiving end may select only the packets including metadata streams, which are judged as required, before the metadata stream packets are disassembled. Therefore, the receiving end may receive metadata more efficiently.
(10) Depended information that specifies other metadata streams to be associated with a metadata stream corresponding to received metadata stream information, if included in the transmitted metadata stream information, allows the receiving end to identify other metadata streams required for using the metadata stream including required metadata and to correctly receive the required metadata stream and other required metadata streams required for using the required metadata stream. This configuration allows the receiving end to receive metadata more efficiently.
(11) Transmitting metadata stream information to the receiving end first and then the required metadata streams requested by the receiving end based on the transmitted metadata stream information not only allows the receiving end to receive metadata efficiently but also transmits metadata more efficiently.

## Claims

1. A metadata receiving apparatus receiving metadata streams that describe the substance of contents and metadata stream information that is information on the metadata streams, said metadata stream information including at least one of information on a data amount of a metadata stream corresponding thereto and information on description contents of said corresponding metadata stream, said metadata receiving apparatus comprising:
receiving means (6) for separating received data into the metadata streams and the metadata stream information for output;
metadata stream information interpreting means (7) for checking a requirement of each of the metadata streams corresponding to the received metadata stream information based on at least one of the information on the data amount and the information on the description contents, both information being included in the received metadata stream information;
metadata stream selecting means (8) for selecting only the metadata streams, which are judged as required by said metadata stream information interpreting means (7), from the metadata streams output by said receiving means (6) and outputting the selected metadata streams; and
metadata merging means (9) for merging the metadata streams output by said metadata stream selecting means (8) and outputting the merged metadata streams as metadata.

2. A metadata receiving apparatus receiving packets assembled from metadata streams that describe the substance of contents and packets assembled from metadata stream information that is information on the metadata streams,
wherein the metadata stream information includes at least one of information on a data amount of a metadata stream corresponding thereto and information on description contents of the corresponding metadata stream and wherein an identifier indicating that the metadata stream is included and an identifier identifying the metadata stream are added to each packet that includes the metadata stream and an identifier indicating that the metadata stream information is included is added to each packet that includes the metadata stream information, said metadata receiving apparatus comprising:
receiving means (6a) comprising packet separating means (11) for separating received packets into packets including the metadata stream information and packets including the metadata stream, for disassembling the packets including the metadata stream information and outputting the metadata stream information, and, based on requirement checking information, for disassembling packets including the metadata stream judged as required and outputting metadata streams judged as required;
metadata stream information interpreting means (12) for checking a requirement of the metadata stream corresponding to the received metadata stream information and outputting the requirement checking information to said receiving means (6a), said requirement checking being based on at least one of the information on the data amount of the corresponding metadata stream and the information on the description contents of the corresponding metadata stream, both information being included in the metadata stream information output by said receiving means (6a); and
a metadata merging means (9) for merging the metadata streams output by said receiving means (6a) and outputting metadata,
wherein said packet separating means (11) separates the receivedpackets into the packets including the metadata stream information and the packets including the metadata streams based on the identifier indicating that the metadata stream information is included and the identifier indicating that the metadata stream is included, disassembles the packets including the metadata stream information and outputs the metadata stream information, selects the packets including the metadata stream, which is judged as required based on the requirement checking information, using the identifier identifying the metadata stream, and disassembles the selected packets and outputs the metadata streams.

3. A metadata receiving apparatus requesting a sending end to send, and receiving from the sending end, a metadata stream that describes the substance of contents and metadata stream information that is information on the metadata stream,
said metadata stream information including at least one of information on a data amount of a metadata stream corresponding thereto and information on description contents of said corresponding metadata stream, said receiving apparatus comprising:
metadata stream information receiving means (31) for requesting the sending end to send, and receiving from the sending end, the metadata stream information that is predetermined;
checking means (32) for checking a requirement of the metadata stream corresponding to the received predetermined metadata stream information based on at least one of the data amount of the received predetermined metadata stream information and the information on the description contents, both information being included in the received predetermined metadata stream information;
metadata stream receiving means (33) for requesting the sending end to send, and receiving from the sending end, the metadata stream judged as required by said checking means (32); and
merging means (34) for merging a plurality of received metadata streams if the plurality of metadata streams are received.

4. The metadata receiving apparatus according to claim 3,
wherein the predetermined metadata stream information includes depended information that is information specifying other metadata streams to be associated with the metadata stream corresponding to the predetermined metadata stream information,
wherein said checking means (32) extracts the depended information from the received predetermined metadata stream information and outputs request information, which requests the sending end to send the metadata stream information on the other metadata streams specified by the depended information, to said metadata stream information receiving means (31),
wherein, in response to the request information, said metadata stream information receiving means (31) additionally requests the sending end to send, and receives from the sending end, the metadata stream information on the other metadata stream specified by the depended information, and
wherein, based on the additionally received metadata stream information, said checking means (32) additionally judges the other metadata streams, which are specified by the depended information, as required if the other metadata streams may be processed after reception.

5. A metadata receiving method for receiving a plurality of metadata streams, which are generated by dividing metadata describing the substance of contents, and metadata stream information which is information on each of the metadata streams,
said metadata stream information including at least one of information on a data amount of a metadata stream corresponding thereto and information on description contents of said corresponding metadata stream, said method comprising the steps of:
selecting (B2) predetermined metadata streams from the received metadata streams based on at least one of the information on the data amount and the information on the description contents, both information being included in the received metadata stream information; and merging (B3) and outputting (F) the selected metadata streams.

6. A metadata receiving method for receiving a plurality of metadata streams describing the substance of contents and metadata stream information on each of the metadata streams,
wherein each unit of the metadata stream information includes at least one of a data amount of a metadata stream corresponding thereto and information on description contents of the corresponding metadata stream, said metadata receiving method comprising the steps of:
selecting (B2) predetermined metadata streams from the received metadata streams based on at least one of the information on the data amount and the information on the description contents, both information being included in the received metadata stream information; and merging (B3) and outputting (F) the selected metadata streams.

7. The metadata receiving method according to claim 5 or 6,
wherein, if depended information is included in the metadata stream information on the predetermined metadata stream selected from the received metadata streams, said depended information specifying other metadata streams to be associated with the predetermined metadata stream,
said metadata receiving method further comprising the steps of:
if there are metadata streams specified by the depended information but not included in the selected predetermined metadata streams, additionally selecting metadata streams, which may be processed after reception, from the metadata streams not included in the selected predetermined metadata streams; merging the additionally selected metadata streams with the already selected metadata streams; and outputting the merged metadata streams.

8. The metadata receiving method according to any one of claims 5-7,
wherein each of the metadata streams and each unit of the metadata stream information that are received are assembled in packets,
wherein an identifier indicating that the metadata stream is included is added to a packet including the metadata stream and an identifier indicating that the metadata stream information is included is added to a packet including the metadata stream information, and
wherein the packets including the metadata stream information are received before the packets including the metadata stream information are received.

9. The metadata receiving method according to any one of claims 5-7,
wherein each of the metadata streams and each unit of the metadata stream information that are received are assembled in packets,
wherein an identifier indicating that the metadata stream is included and an identifier identifying the metadata stream are added to a packet including the metadata stream and an identifier indicating that the metadata stream information is included is added to a packet including the metadata stream information, and
wherein the packets including the metadata stream information are received before the packets including the metadata stream information are received.

10. A metadata receiving method for requesting a sending end to send, and receiving from the sending end, a metadata stream describing the substance of contents and metadata stream information that is information on the metadata stream,
said metadata stream information including at least one of information on a data amount of a metadata stream corresponding thereto and information on description contents of said corresponding metadata stream, said metadata receiving method comprising the steps of:
requesting (J) the sending end to send, and receiving (K) from the sending end, the metadata stream that is predetermined;
checking (H1) a requirement of the metadata stream corresponding to the received predetermined metadata stream information based on at least one of the information on the data amount and the information on the description contents, both information being included in the received predetermined metadata stream information; and
requesting (L) the sending end to send, and receiving (M) from the sending end, the metadata stream judged as required.

11. The metadata receiving method according to claim 10,
wherein, if depended information is included in the received predetermined metadata stream information (H2), said depended information specifying other metadata streams to be associated with the metadata stream corresponding to the predetermined metadata stream information, said metadata receiving method further comprises the steps of:
requesting (J) the sending end to send, and receiving (K) from the sending end, the metadata stream information on the other metadata streams specified by the depended information; and, based on the received metadata stream information, also judging (H1) metadata streams as required if the metadata streams included in the other metadata streams specified by the depended information may be processed after reception.

12. The metadata receiving method according to claim 10 or 11,
wherein the metadata stream information sent from the sending end is assembled in packets and the packets are disassembled to obtain the metadata stream information and
wherein the metadata stream sent from the sending end is assembled in packets and the packets are disassembled to obtain the metadata stream.

13. A metadata receiving program causing a computer to function as receiving means for receiving a plurality of metadata streams describing the substance of contents and metadata stream information that is information on each of the metadata streams,
said metadata stream information including at least one of information on a data amount of the corresponding metadata stream and information on description contents of said corresponding metadata stream,
said metadata receiving program causing the computer to execute:
a receiving function separating received data into the metadata streams and the metadata stream information;
a selecting function (B2) selecting predetermined metadata streams from the received metadata streams based on at least one of the information on the data amount and the information on the description contents, both information being included in the received metadata stream information; and
a merging (B3) and outputting (F) function merging the selected metadata streams and outputting the merged data, thus causing the computer to function as metadata receiving means.

14. The metadata receiving program according to claim 13,
wherein, if depended information is included in the metadata stream information on the predetermined metadata stream selected from the received metadata streams, said depended information specifying other metadata streams to be associated with the predetermined metadata stream, said metadata receiving program further causes the computer to execute:
if there are metadata streams specified by the depended information but not included in the selected predetermined metadata streams, an additional selection function additionally selecting metadata streams, which may be processed after reception, from the metadata streams not included in the selected predetermined metadata streams; and
an additional merging and output function merging the additionally selected metadata streams with the already selected metadata streams and outputting the merged metadata streams.

15. A metadata receiving program causing a computer to function as receiving means for requesting a sending end to send, and receiving from the sending end, a metadata stream describing the substance of contents and metadata stream information that is information on the metadata stream,
said metadata stream information including at least one of information on a data amount of the corresponding metadata stream and information on description contents of said corresponding metadata stream, said metadata receiving program causing the computer to execute:
a metadata stream information receiving function requesting (J) the sending end to send, and receiving (K) from the sending end, the metadata stream that is predetermined;
a checking function (H1) checking a requirement of the metadata stream corresponding to the received predetermined metadata stream information based on at least one of the information on the data amount and the information on the description contents, both information being included in the received predetermined metadata stream information; and
a metadata stream receiving function requesting (L) the sending end to send, and receiving (M) from the sending end, the metadata stream judged as required, thus causing the computer to function as metadata receiving means.

16. The metadata receiving program according to claim 15,
wherein, if depended information is included in the received predetermined metadata stream information (H2), said depended information specifying other metadata streams to be associated with the metadata stream corresponding to the predetermined metadata stream information, said metadata receiving program further causing the computer to execute:
said metadata stream information receiving function as a receiving function that requests (J) the sending end to send, and additionally receives (K) from the sending end, the metadata stream information on the other metadata streams specified by the depended information; and
said checking function as a checking function that, based on the additionally received metadata stream information, also judges (H2) metadata streams as required if the metadata streams included in the other metadata streams specified by the depended information may be processed after reception.

17. A computer-readable recording medium recording therein the metadata receiving program according to any one of claims 13-16.

18. A metadata sending apparatus comprising:
first communication controlling means (3) for assembling into packets a plurality of metadata streams describing the substance of contents and metadata stream information that is information on each of the metadata streams, said metadata stream information including at least one of information on a data amount of the corresponding metadata stream and information on description contents of said corresponding metadata stream;
second communication controlling means (5) for assembling contents data, which is data of the contents, into packets; and
sending means (4) for multiplexing the metadata streams assembled in the packets, the metadata stream information assembled in packets, and the contents data assembled in packets for transmission to a transmission line.

19. A metadata sending apparatus comprising:
storing means (2a) for storing a plurality of metadata streams describing the substance of contents and metadata stream information that is information on each of the metadata streams, said metadata stream information including at least one of information on a data amount of a metadata stream corresponding thereto and information on description contents of said corresponding metadata stream; and
sending means (21, 22) for sending the metadata stream information and the metadata streams read from the storing means, the metadata stream information preceding the metadata streams.

20. The metadata stream sending apparatus according to claim 18 or 19,
wherein at least one unit of the metadata stream information includes depended information specifying other metadata streams to be associated with the corresponding metadata stream.

21. A metadata sending apparatus comprising:
metadata stream sending controlling means (22) for arranging into one stream, and assembling into packets, a plurality of metadata streams describing the substance of contents and for adding to each packet an identifier indicating that the metadata stream is included;
metadata stream information sending controlling means (21) for arranging into one stream, and assembling into packets, a plurality of metadata stream information units each of which is information on each metadata stream and for adding to each packet an identifier indicating that the metadata stream information is included, said metadata stream information including at least one of information on a data amount of a metadata stream corresponding thereto and information on description contents of said corresponding metadata stream; and
sending means (21, 22) for sending the packets including the metadata stream information to a transmission line before sending the packets including the metadata streams.

22. A metadata sending apparatus comprising:
metadata stream sending controlling means (22) for assembling into packets each of a plurality of metadata streams describing the substance of contents and for adding to each packet an identifier indicating that the metadata stream is included and an identifier indicating the metadata stream;
metadata stream information sending controlling means (21) for arranging into one stream, and assembling into packets, a plurality of metadata stream information units each of which is information on each metadata stream and for adding to each packet an identifier indicating that the metadata stream information is included, said metadata stream information including at least one of information on a data amount of a metadata stream corresponding thereto and information on description contents of said corresponding metadata stream; and
sending means (21, 22) for sending the packets including the metadata stream information to a transmission line before sending the packets including the metadata streams.

23. A metadata sending apparatus comprising:
storing means (2a) for storing a plurality of metadata streams describing the substance of contents and metadata stream information that is information on each of the metadata streams, said metadata stream information stored in said storing means including at least one of information on a data amount of the metadata stream corresponding thereto and information on description contents of said corresponding metadata stream;
first sending means (21) for sending the metadata stream information, which is read from said storing means, to a transmission line in response to a request from a receiving end; and
second sending means (22) for reading from said storing means the metadata stream requested by the receiving end based on the metadata stream information that was sent and sending the metadata stream that was read to the transmission line.

24. A metadata sending apparatus comprising:
storing means (2a) for storing a plurality of metadata streams describing the substance of contents and metadata stream information that is information on each of the metadata streams, said metadata stream information stored in said storing means including at least one of information on a data amount of a metadata stream corresponding thereto and information on description contents of said corresponding metadata stream;
first sending means (21) for assembling into packets the metadata stream information read from said storing means and sending the packets to a transmission line in response to a request from a receiving end; and
second sending means (22) for reading from said storing means the metadata stream requested by the receiving end based on the metadata stream information that was sent, assembling into packets the metadata stream that was read, and sending the packets to the transmission line.

25. A metadata transmitting method for transmitting (E) a plurality of metadata streams generated by dividing metadata describing the substance of contents and for transmitting (D) information on each of the metadata streams as metadata stream information, said metadata stream information including at least one of information on a data amount of a metadata stream corresponding thereto and information on description contents of said corresponding metadata stream.

26. A metadata transmitting method for transmitting (E) a plurality of metadata streams describing the substance of contents and for transmitting (D) information on each of the metadata streams as metadata stream information, saidmetadata stream information including at least one of information on a data amount of a metadata stream corresponding thereto and information on description contents of said corresponding metadata stream.

27. The metadata transmitting method according to claim 25 or 26,
wherein at least one of metadata stream information units includes depended information specifying other metadata streams to be associated with the corresponding metadata stream.

28. The metadata transmitting method according to any one of claims 25-27,
wherein each of the metadata streams and each unit of the metadata stream information are transmitted in packets,
wherein an identifier indicating that the metadata stream is included is added to a packet including the metadata stream and an identifier indicating that the metadata stream information is included is added to a packet including the metadata stream information, and
wherein the packets including the metadata stream information are transmitted before the packets including the metadata stream information are transmitted.

29. The metadata transmitting method according to any one of claims 25-27,
wherein each of the metadata streams and each unit of the metadata stream information are transmitted in packets,
wherein an identifier indicating that the metadata stream is included and an identifier identifying the metadata stream are added to a packet including the metadata stream and an identifier indicating that the metadata stream information is included is added to a packet including the metadata stream information, and
wherein the packets including the metadata stream information are transmitted before the packets including the metadata streams are transmitted.

30. A metadata transmitting method for transmitting a metadata stream describing the substance of contents and metadata stream information that is information on the metadata stream in response to a request from a receiving end, said metadata transmitting method comprising the steps of:
in response to the request from the receiving end, transmitting (K) the metadata stream information including at least one of information on a data amount of a metadata stream corresponding thereto and information on description contents of said corresponding metadata stream; and
based on the metadata stream information that was transmitted, transmitting (M) the metadata stream requested by the receiving end.

31. A metadata transmitting method for transmitting a metadata stream describing the substance of contents and metadata stream information that is information on the metadata stream in response to a request from a receiving end, said metadata transmitting method comprising the steps of:
in response to the request from the receiving end, transmitting (K) the metadata stream information including at least one of information on a data amount of the corresponding metadata stream and information on description contents of said corresponding metadata stream, both information being assembled in packets; and
based on the metadata stream information that was transmitted, transmitting (M) the metadata stream requested by the receiving end, the metadata stream being assembled in packets.
